## Europäisches Patentamt

## European Patent Office ·

## Office européen des brevets

(19)

(11) Numéro de publication: **0 202 526**
**B1**

(12) **FASCICULE DE BREVET EUROPEEN**

(45) Date de publication du fascicule du brevet:
**03.10.90**

(51) Int. Cl.⁵: **A47B 47/04,** F16B 12/18

(21) Numéro de dépôt: **86106103.4**

(22) Date de dépôt: **03.05.86**

(54) Structure modulaire pour la réalisation de meubles.

(30) Priorité: **17.05.85 CH 2104/85**

(43) Date de publication de la demande:
**26.11.86 Bulletin 86/48**

(45) Mention de la délivrance du brevet:
**03.10.90 Bulletin 90/40**

(84) Etats contractants désignés:
**DE FR GB IT**

(56) Documents cités:
**FR-A- 1 096 441**
**FR-A- 1 415 339**
**US-A- 3 307 505**

(73) Titulaire: **Roux, Alain, Au Clos, CH-1165 Allaman(CH)**

(72) Inventeur: **Roux, Alain, Au Clos, CH-1165 Allaman(CH)**

(74) Mandataire: **Micheli, Michel-Pierre et al, MICHELI & CIE 118, Rue du Rhône Case Postale 47, CH-1211 Genève 6(CH)**

## Description

La présente invention se rapporte à des structures modulaires pour la réalisation de meubles, tels que des meubles de rangement, étagères, rayonnages, supports, socles, etc., comprenant des panneaux horizontaux et des montants de liaison verticaux, chaque panneau étant relié à un autre panneau superposé par au moins un montant présentant en plan la forme d'un U, la face ouverte du montant étant orientée en position de service vers l'arrière.

De nombreux systèmes d'assemblage de panneaux et montants sont déjà connus pour la réalisation de meubles, comme par exemple celui décrit dans le document FR-A 1 096 441, qui correspond au préambule de la revendication 1. Toutefois, dans le cas de meubles destinés au support et au rangement d'appareils munis de fils ou câbles électriques d'alimentation ou de connexion, comme par exemple des appareils de télévision et de radio, magnétoscopes, enregistreurs, éléments de chaîne haute-fidelité, hauts-parleurs, etc., il se pose toujours le problème de la présence de ces fils ou câbles généralement inesthétiques et de la possibilité de les cacher.

Le but de cette invention consiste donc à fournir des structures modulaires qui soient faciles à monter et à assembler pour former des meubles selon de nombreuses variantes, et qui présentent la possibilité de cacher les fils électriques éventuellement reliés aux appareils destinés à être rangés sur les meubles ainsi réalisés. Ce but est atteint par la structure modulaire selon l'invention, qui présente les caractéristiques définies dans la revendication 1.

Des modes particuliers apparaissent dans les revendications dépendantes 2 à 7.

Le dessin annexé illustre schématiquement et à titre d'exemple plusieurs variantes de meubles réalisés avec la structure modulaire selon l'invention.

Les figures 1 et 2 sont des vues respectivement en perspective éclatée et en coupe verticale d'une première réalisation.

La figure 3 est une vue de face d'un meuble réalisé par assemblage de plusieurs structures modulaires selon l'invention.

La figure 4 est une vue en coupe verticale selon la ligne IV–IV de la figure 3.

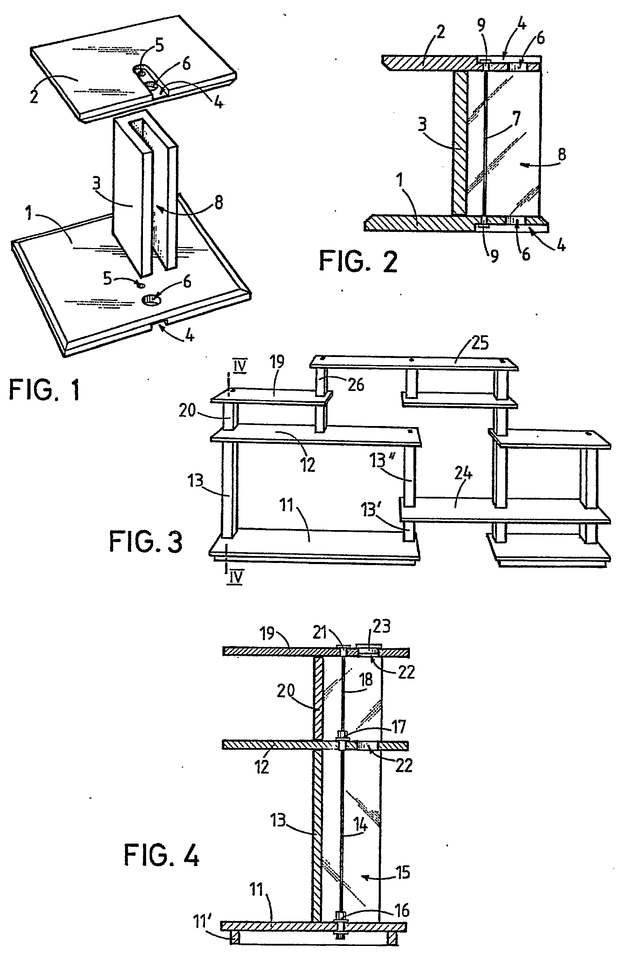

En référence tout d'abord aux figures 1 et 2, une structure modulaire est illustrée comprenant deux panneaux horizontaux superposés 1, 2 et reliés par un montant vertical 3 ayant en plan la forme d'un U. Cette structure modulaire est plus particulièrement destinée à servir de support pour des appareils tels que haut-parleur, téléviseur, etc.

Chaque panneau 1, 2 présente sur une de ses faces, au milieu du côté arrière du panneau, une creusure 4, ainsi que deux perçages 5, 6 pratiqués dans le fond de cette creusure à travers le panneau. Les trois éléments du module, à savoir les deux panneaux 1, 2 et le montant de liaison en U, sont maintenus entre eux au moyen d'une tige filetée 7, disposée en position de service à l'intérieur de l'espace 8 délimité par les parois latérales du montant 3; les extrémités de la tige filetée 7 sont introduites dans les perçages 5 des panneaux 1, 2 et bloquées dans la position illustrée sur la figure 2 par deux écrous à chapeau 9; ces écrous présentent un évidement hexagonal prévu pour recevoir une clé de type "Imbus" permettant le serrage de ces écrous sur la tige filetée 7. Lorsque la structure modulaire ainsi réalisée est utilisée comme support d'appareil, le fil de connexion aboutissant à cet appareil est introduit dans le perçage 6 du panneau supérieur 2, passe dans l'évidement 8 du montant 3 et ressort derrière le panneau inférieur 1 après être passé dans le perçage 6 de ce dernier. Ce fil n'est donc pas visible lorsque le support est vu de face ou de côté.

La forme d'exécution illustrée sur la figure 3 représente un meuble de rangement ou étagère formé par l'assemblage de plusieurs structures modulaires selon l'invention, et destiné à recevoir plus particulièrement du matériel audio-visuel tel que poste de télévision, enregistreur et magnétoscope, amplificateur, tourne-disques, etc.

Ce meuble est donc réalisé par l'assemblage de structures modulaires selon l'invention par juxtaposition et par superposition, en utilisant ici des panneaux de deux longueurs différentes et des montants de liaison également de deux hauteurs différentes. Les dimensions des rayonnages peuvent être ainsi standardisées pour recevoir par exemple des appareils dont les dimensions sont également standardisées.

La figure 4 illustre partiellement la superposition de deux structures modulaires; plus particulièrement, un panneau de base 11, présentant un rebord périphérique 11' posé sur le sol, est relié à un panneau intermédiaire 12 par l'entremise d'un montant de liaison 13; ces trois éléments sont fixés entre eux par une tige filetée 14 disposée à l'intérieur de l'évidement 15 du montant 13 en U, les extrémités de cette tige filetée 14 étant introduits dans des perçages pratiqués dans lesdits panneaux respectivement de base 11 et intermédiaire 12 et bloqués dans cette position par des écrous 16, 17. L'écrou de fixation 16 au panneau de base 11 est soit un écrou à chapeau, soit un écrou six pans vissé sur l'extrémité de la tige filetée 14 et bloqué par une vis avec une rondelle intermédiaire. Le douille taraudée 17 fixant la tige filetée 14 sur la panneau intermédiaire 12 sert également d'écrou de liaison avec une seconde tige filetée 18 destinée à la fixation d'un panneau supérieur 19, celui-ci étant relié au panneau intermédiaire 12 par l'entremise d'un montant en U 20; l'extrémité supérieure de la tige filetée 18 est bloquée dans un perçage pratiqué dans ledit panneau supérieur 19 au moyen d'un écrou de fixation 21, par exemple du type à chapeau.

En outre, les panneaux 12, 19 sont chacun percés d'une ouverture 22 pour le passage d'éventuels fils ou câbles, reliés aux appareils destinés à être rangés sur le meuble ainsi constitué. L'ouverture pratiquée dans le panneau supérieur 19 peut être, si désiré pour des raisons esthétiques, fermé par un bouchon 23.

Comme illustré sur la figure 3, le meuble est formé par l'assemblage, par juxtaposition et par superposition de plusieurs structures modulaires. Plus particulièrement, un premier panneau intermédiaire de liaison 24 est monté entre deux montants 13', 13" entre le panneau de base 11 et le panneau intermédiaire 12; de même, un second panneau de liaison 25 est monté au-dessus du panneau supérieur 19, par l'entremise d'un montant 26 fixé au-dessus du montant 20 de la structure modulaire comprenant les panneaux respectivement intermédiaire 12 et supérieur 19.

Bien entendu, de très mombreuses autres variantes peuvent être imaginées sur le même principe, avec notamment des structures modulaires en porte-à-faux, et présentant toujours les mêmes avantages, à savoir un montage facile, sans nécessiter de colle ou autre dispositif de fixation complexe, et la possibilité de cacher les fils et câbles des appareils rangés sur les meubles réalisés dans les évidements des montants en U.

## Revendications

1. Structure modulaire pour la réalisation de meubles comprenant des panneaux horizontaux (1, 2, 11, 12, 19) et des montants (3, 13, 20) de liaison verticaux, chaque panneau (1, 11, 12) étant relié à un autre panneau superposé (2, 12, 19) par au moins un montant (3, 13, 20) présentant en plan la forme d'un U, la face ouverte du montant étant orientée en position de service vers l'arrière, caractérisé par le fait qu'une entretoise de fixation (7, 14, 18) est disposée verticalement à l'intérieur (8, 15) de chaque montant (3, 13, 20) en U, les extrémités de cette entretoise (7, 14, 18) étant chacune fixée en position de service à l'un des panneaux horizontaux superposés (1, 2, 11, 12, 19), et par le fait que chaque panneau (1, 2, 12, 19) présente du côté arrière du panneau et à proximité d'un perçage de fixation (5) de l'entretoise (7, 14, 18) une ouverture (6, 22) destinée au passage de fils ou câbles, cette ouverture (6, 22) débouchant verticalement en position de service à l'intérieur (8, 15) du montant (3, 13, 20).

2. Structure modulaire selon la revendication 1, caractérisée par le fait que chaque panneau comporte une creusure (4) débouchant sur le côté arrière du panneau, et par le fait que le perçage de fixation (5) de l'entretoise et l'ouverture (6, 22) de passage des fils ou câbles sont pratiqués dans le fond de cette creusure (4).

3. Structure modulaire selon la revendication 1 ou la revendication 2, caractérisée par le fait que l'entretoise de fixation (7, 14, 18) est une tige filetée, et par le fait que chaque extrémité de celle-ci est bloquée dans le perçage d'un panneau au moyen d'un écrou (9, 17).

4. Structure modulaire selon la revendication 3, caractérisée par le fait qu'une autre tige filetée (18) est vissée dans le même écrou de fixation (17) de la première tige (14) filetée et dans le prolongement de celle-ci.

5. Structure modulaire selon l'une des revendications 1 à 4, caractérisée par le fait qu'elle comporte un bouchon fermant ladite ouverture (6) destinée au passage de fils ou câbles.

6. Meuble, caractérisé par le fait qu'il est formé par la juxtaposition et/ou la superposition de structures modulaires selon l'une des revendications 1 à 5.

7. Meuble selon la revendication 6, caractérisé par le fait qu'en position de service superposée de deux structures modulaires selon la revendication 3, la tige filetée (18) de la structure supérieure est vissée dans le même écrou de fixation (17) que la tige filetée (14) de la structure inférieure et dans le prolongement vertical de celle-ci.

## Claims

1. Modular structure for the realization of furniture comprising horizontal panels (1, 2, 11, 12, 19) and vertical connecting uprights (3, 13, 20), each panel (1, 11, 12) being connected to another superimposed panel (2, 12, 19) by at least an upright (3, 13, 20) presenting in plane the shape of a U, the opened face of the upright being oriented in service position rearwardly, characterized by the fact that a fixing brace (7, 14, 18) is disposed vertically inside (8, 15) each U upright (3, 13, 20), the ends of this brace (7, 14, 18) being each fixed in service position to one of the superimposed horizontal panels (1, 2, 11, 12, 19), and by the fact that each panel (1, 2, 12, 19) presents on the rear side of the panel and nearby a fixing boring (5) of the brace (7, 14, 18) an opening (6, 22) for the passage of wires or cables, this opening (6, 22) emerging vertically in service position inside (8, 15) the upright (3, 13, 20).

2. Modular structure according to claim 1, characterized by the fact that each panel comprises a recess (4) emerging on the rear side of the panel, and by the fact that the fixing boring (5) of the brace and the passage opening (6, 22) of the wires or cables are provided into the bottom of said recess (4).

3. Modular structure according to claim 1 or to claim 2, characterized by the fact that the fixing brace (7, 14, 18) is a threaded rod, and by the fact that each end thereof is locked in the boring of a panel by means of a nut (9, 17).

4. Modular structure according to claim 3, characterized by the fact that another threaded rod (18) is screwed in the same fixing nut (17) of the first threaded rod (14) and in the prolongation thereof.

5. Modular structure according to one of claims 1 to 4, characterized by the fact it comprises a plug closing said opening (6) intended for the passage of wires or cables.

6. Piece of furniture, characterized by the fact that it is formed by the juxtaposition and/or the superimposition of modular structures according to one of claims 1 to 5.

7. Piece of furniture according to claim 6, characterized by the fact that in the superimposed service position of two modular structures according to claim 3, the threaded rod (18) of the upper structure is screwed in the same fixing nut (17) than the threaded rod (14) of the lower structure and in the vertical prolongation thereof.

## Patentansprüche

1. Modulare Struktur für Möbel mit horizontalen Brettern (1, 2, 11, 12, 19) und senkrechten Verbindungsstreben (3, 13, 20), wobei jedes Brett (1, 11, 12) mit einem anderen darüberliegenden Brett (2, 12, 19) über mindestens eine Strebe (3, 13, 20) verbunden ist, die in einer Ebene U-förmig ist und die offene Seite der Strebe in aufgebauter Stellung nach hinten orientiert ist, dadurch gekennzeichnet, daß eine Befestigungsstrebe (7, 14, 18) vertikal im Inneren (8, 15) einer jeden U-förmigen Strebe (3, 13, 20) angeordnet ist, wobei die Enden dieser Verstrebung (7, 16, 18) jeweils in aufgebauter Stellung an einem der übereinander angeordneten waagerechten Bretter (1, 2, 11, 12, 19) befestigt sind, und dadurch, daß jedes Brett (1, 2, 12, 19) auf seiner Rückseite und in der Nähe einer Befestigungsbohrung (5) der Verstrebung (7, 14, 18) eine Öffnung (6, 22) für den Durchgang von Drähten oder Kabeln aufweist, wobei diese Öffnung (6, 22) in aufgebauter Stellung senkrecht im Inneren (8, 15) der Strebe (3, 13, 20) mündet.

2. Träger nach Anspruch 7, dadurch gekennzeichnet, daß jedes Brett eine Öffnung (4) aufweist, die zur Rückseite hin offen ist und in deren Boden die Befestigungsbohrung (5) der Verstrebung und die Öffnung für den Durchgang der Drähte oder Kabel eingearbeitet sind.

3. Modulare Struktur nach Anspruch 1 oder 2, dadurch gekennzeichnet, daß die Befestigungsverstrebung (7, 14, 18) eine Gewindestange ist und dadurch, daß jedes Ende dieser Gewindestangen in der Bohrung eines Brettes mittels einer Schraubenmutter (9, 17) festgestellt ist.

4. Modulare Struktur nach Anspruch 3, dadurch gekennzeichnet, daß eine weitere Gewindestange (18) in die selbe Befestigungsschraubenmutter (17) der ersten Gewindestange als dessen Verlängerung eingeschraubt ist.

5. Modulare Struktur nach einem der Ansprüche 1 bis 4, dadurch gekennzeichnet, daß sie einen Stopfen zum Verschließen der Öffnung (6) zum Durchgang von Drähten oder Kabeln aufweist.

6. Möbel, dadurch gekennzeichnet, daß es durch Nebeneinander- und/oder Übereinanderanordnung der modularen Struktur nach einem der Ansprüche 1 bis 5 gebildet wird.

7. Möbel nach Anspruch 6, dadurch gekennzeichnet, daß bei Übereinanderanordnung zweier modularer Strukturen nach Anspruch 3 die Gewindestange in dieselbe Schraubmutter (17) eingeschraubt ist wie die Gewindestange der unteren Struktur und daß sie diese vertikal verlängert.

**FIG. 1**

**FIG. 2**

**FIG. 3**

**FIG. 4**